(19) Europäisches Patentamt
European Patent Office
Office européen des brevets

(11) **EP 4 742 149 A1**

(12) **EUROPEAN PATENT APPLICATION**

(43) Date of publication:
**13.05.2026 Bulletin 2026/20**

(21) Application number: **25213753.4**

(22) Date of filing: **05.11.2025**

(51) International Patent Classification (IPC):
**G06T 5/77** *(2024.01)* **G06T 5/20** *(2006.01)*

(52) Cooperative Patent Classification (CPC):
**G06T 5/77; G06T 5/20;** G06T 2207/10028;
G06T 2207/30036

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.11.2024 DK PA202470279**

(71) Applicant: **3Shape A/S
1060 Copenhagen K (DK)**

(72) Inventors:
• **MIHOV, Filip
1060 Copenhagen K (DK)**
• **HUSEINI, Admir
1060 Copenhagen K (DK)**
• **BAZAOU, Slimane
1060 Copenhagen K (DK)**

(74) Representative: **Zacco Denmark A/S
Arne Jacobsens Allé 15
2300 Copenhagen S (DK)**

(54) **A COMPUTER-IMPLEMENTED METHOD AND AN INTRAORAL SCANNING SYSTEM FOR REMOVING GLARE DEFECTS IN IMAGE SCAN DATA**

(57) The present disclosure relates to a computer-implemented method and an intraoral scanning system. The computer-implemented method for removing a glare defect in a processed image scan data, comprising: receiving a plurality of image scan data of a dental object produced by an intraoral scanner, processing one or more image scan data of the plurality of image scan data into a processed image scan data, wherein the processed image scan data includes a plurality of pixels, determining a plurality of defect pixels in the processed image scan data by a glare detection algorithm, wherein the glare detection algorithm may be configured to determine the plurality of defect pixels, when a pixel value of each of the plurality of defect pixels fulfils one or more pixel value criteria, and, when a geometry of an arrangement of the plurality of defect pixels fulfils one or more geometry criteria, determining, by a glare-removal algorithm, non-glare image scan data by analysing pixels of the plurality of pixels that are in vicinity to the plurality of defect pixels, and replacing the processed image scan data in the plurality of defect pixels with the non-glare image scan data.

FIG. 1

EP 4 742 149 A1

**Description**

**FIELD**

The disclosure relates to a computer-implemented method and an intraoral scanning system that is configured to remove glared defects in image scan data. More specifically, the glare defect is removed based on image processing.

**BACKGROUND**

Scanning a patient's mouth may involves many artifacts caused, for example, by stripe loss due to the scene geometry, shadows in the scene, tooth defects and/or other factors affecting the stripe shape, continuousness and/or alignment; stripe reconstruction failure and/or false detection of stripes may be caused for example by the different materials in the scene (e.g. teeth and gingiva), specular reflections from fluids in the scene (e.g. blood, saliva) and natural and/or cast shadows in the scene. Especially, specular reflections are not a trivial artifact to overcome. One way to overcome specular reflections is by cross polarize the illumination and the light source, but to have an effective cross-polarization, in the sense of removing glares, across a broad-spectrum of wavelength is difficult. For example, in an intraoral scanning system that emits wavelengths from ultraviolet (UV) wavelengths to infrared (NIR/IR) wavelengths would impose a risk of glare defects in images with UV and/or NIR/IR wavelengths.

It is known that NIR/IR light can be used for assessing internal structure of a tooth, internal features (such as cracks, caries) and tooth surface in the form of transillumination of teeth or light reflection and backscattering from teeth. Unfortunately, glare defects would for some dentists be difficult to distinguish from for example caries which would results in false positives, i.e. false caries.

Therefore, there is a need for a solution to the problem of removing glare defects when emitting light that includes wavelengths between UV and NIR/IR.

**SUMMARY**

It is an aspect of the present disclosure to overcome the above-mentioned problem on how to remove glare defects in image scan data when the emitted light includes wavelengths between UV and NIR/IR.

According to the aspect, a computer-implemented method for removing a glare defect in a processed image scan data is disclosed. The method includes receiving a plurality of image scan data of a dental object produced by an intraoral scanner. The dental object may be a tooth, a series of teeth and/or gingival. The dental object may be a single jaw, or a combination of upper and lower jaw being separated or in a clinched state. The plurality of image scan data may include image scan data with three-dimensional image scan data and/or two-dimensional image scan data, such as diagnostic image scan data. The three-dimensional image scan data may be stitched together to produce a three-dimensional model of the dental object, wherein the two-dimensional image scan data may be used for diagnosing the dental object either manually by a user (via a display unit configured to display the two-dimensional image scan data and the three-dimensional model) or automatically by artificial intelligence. The intraoral scanner may employ a scanning principle such as triangulation-based scanning, confocal scanning, or focus scanning.

The method may further include processing one or more image scan data of the plurality of image scan data or the two-dimensional image scan data into a processed image scan data, wherein the processed image scan data includes a plurality of pixels. The one or more image scan data may be similar to the two-dimensional image scan data and diagnostic image scan data. A processed image scan data may include a captured image scan data which have been processed for improving the quality of the captured image scan data. For example, the improvements may involve enhanced detail and contrast and reduced noise and distortion. The processed image scan data may include a composition of multiple image scan data which includes wavelengths within UV wavelength range, visible (VIS) wavelength range, and infrared (NIR/IR) wavelength range. The composition of multiple image scan may include a weighted combination of image scan data with different wavelengths. The advantages of the composition of multiple image scan data are that the contrast and detail of internal features and structures of a tooth improves significantly more in comparison to processed image scan data that solely includes wavelengths within NIR/IR range.

The method may further include determining, by a glare detection algorithm, a plurality of defect pixels in the processed image scan data by analysing a pixel value of each of the plurality of pixels. The processed image scan data includes a plurality of pixels that may correspond to the pixels of an image sensor of the intraoral scanner, and some of these pixels of the processed image scan data may include a glare defect that is seen as specular reflections with high intensities. The plurality of defect pixels includes these pixels that comprises the glare defect.

The glare detection algorithm analysis each of the plurality of pixels to determine whether each of the plurality of pixels include a glare defect, and the analysis includes evaluating the pixel value of a pixel. The glare detection algorithm may perform an evaluation of a size, a width and/or a shape of the glare defect by analysing an arrangement of the plurality of defect pixels in the processed image scan data. The arrangement of the plurality of defect pixels forms the glare defect in the processed image scan data, and the form is being analysed by the glare detection algorithm in order to determine the size, the width and/or the shape of the glare defect and then compare the determined size and width to a size and width range that is/are stored in a memory unit, respectively. The determined shape may be compared to a glare defect template that is stored in the memory unit, and wherein the glare detection algorithm is configured to scale the glare defect template in order to fit it to the determined shape of the glare defect. The scaling does not introduce a change of the shape of glare defect template.

After the glare defect has been detected, the plurality of defected pixels needs to be removed and replaced with a filler, i.e. new pixel values, that will appear natural relative to the neighbouring pixels in the processed image scan data. The method may further include determining, by a glare-removal algorithm, non-glare image scan data by analysing pixels that are in vicinity to the plurality of defect pixels, wherein the processed image scan data in the plurality of defect pixels are replaced by the non-glare image scan data.

The method may further include reconstructing and displaying a three-dimensional model of the dental object based on the image scan data with three-dimensional image scan data, and displaying the diagnostic image scan data with the non-glare image scan data. The displaying of the diagnostic image scan data with the non-glare image scan data would either be next to the 3D model or alone its own graphical user interface. In yet another example, the displaying of the diagnostic image scan data with the non-glare image scan data may be merged into the 3D model.

By removing the glare defect in the digitally domain rather than in the analogue domain which implies arranging a polarizer in front of a projector and another polarizer in front of the image sensor, wherein the relative polarization between the two polarizer is crossed. These polarizers can be expensive to fabricate when adapted to the wavelength range from UV to NIR/IR. Furthermore, by adding the polarizer to an optical system of the intraoral scanner would increase the complexity of the intraoral scanner. By applying the glare detection algorithm and the glare-removal algorithm provides the advantage of avoiding to apply polarizers to the optical system which produces a cross-polarization between the emitted and reflected light (captured by the image sensor) within the wavelength range from UV to NIR/IR, e.g. from 350 nm to 1150 nm.

A computer-implemented method for removing a glare defect in a processed image scan data, comprising receiving a plurality of image scan data of a dental object produced by an intraoral scanner. The method may include processing one or more image scan data of the plurality of image scan data into a processed image scan data, wherein the processed image scan data includes a plurality of pixels, determining a plurality of defect pixels in the processed image scan data by a glare detection algorithm, wherein the glare detection algorithm may be configured to determine the plurality of defect pixels, when a pixel value of each of the plurality of defect pixels fulfils one or more pixel value criteria, and, when a geometry of an arrangement of the plurality of defect pixels fulfils one or more geometry criteria. Furthermore, the method includes determining, by a glare-removal algorithm, non-glare image scan data by analysing pixels of the plurality of pixels that are in vicinity to the plurality of defect pixels, and wherein the processed image scan data in the plurality of defect pixels are replaced by the non-glare image scan data.

The plurality of image scan data may include a first image scan data that includes a visible wavelength and at least a second image scan data that includes a non-visible wavelength, wherein the processed image scan data includes a composition of the first image scan data and the at least second image scan data. The intraoral scanner may include a first light source configured to emit a visible wavelength and a second light source configured to emit a non-visible wavelength, such as NIR/IR or UV wavelengths. The intraoral scanner may include a third light source that is configured to emit non-visible wavelength, such as NIR/IR or UV wavelengths. The intraoral scanner may include an image sensor that is configured to capture both visible and non-visible wavelengths. In another example, the intraoral scanner may include a first image sensor that is configured to receive VIS wavelengths and a second image sensor configured to receive NIR/IR wavelengths. The lights sources may be configured to emit light at the same time or subsequently to each other according to a scan sequence protocol. The processed image scan data may include a composition of the first image scan data and the at least second image scan data. In another example, the processed image scan data may include a composition of the first image scan data, the at least second image scan data and a third image scan data, wherein the first image scan data includes VIS wavelengths, the second image scan data may include NIR/IR wavelength and the second image scan data may include fluorescent VIS wavelengths, such as green and red wavelengths excited by the UV emitted light. The advantage of removing glare defects in the composition of the image scan data would be that any glare defects that may appear in any of the image scan data having different wavelengths would be removed in the composed image scan data. That is relevant when no cross-polarization is present in the optical system of the intraoral scanner. However, in an optical system that includes cross-polarization, then it would be enough to remove glare defects in the image scan data that includes wavelengths which the polarizers that forms the cross-polarization are not optimized to. In such example, the processed image scan data includes the at least second image scan data, and wherein the method comprising determining a composition of the first image scan data and the processed image scan data. The glare defects that were present in the processed image scan data are removed before being composed with the first image scan data.

The glare detection algorithm may include following steps determining a group of defect pixels in the processed image scan data, wherein the arrangement of the plurality of defect pixels includes contiguous pixels, wherein the group of defect pixels corresponds to a potential glare region in the processed image scan data, and determining, when the potential glare region has a geometry that fulfils one or more geometry criteria, that the group of defect pixels includes glare defects, wherein the group of defect pixels is the plurality of defect pixels. The contiguous pixels may include pixels that are directly connected in the processed image scan data. The potential glare region may or may not include a glare defect. Whether the pixel does actual include a glare defect may be determined when the potential glare region has a geometry that fulfils a geometry criterion. The geometry criterion or the one or more geometry criterion may include a size criterion, a width criterion and/or a shape criterion.

The size criterion assessing whether the geometry has an area that is within an area range. The width criterion assessing whether the geometry has a width along a dimension of the plurality of defect pixels that is within a width range. The shape criterion assessing whether the geometry has a shape that matches a plurality of glare shape templates.

The area range may be between 0.5 mm$^2$ and 3 mm$^2$. The width range may be between 0.25 mm and 3 mm. The plurality of glare shape templates may include circular and oval glare shapes.

The one or more pixel value criteria may include a change in pixel value between the pixel values of the plurality of defect pixels and the pixels of the plurality of pixels that are in vicinity to the plurality of defect pixels, wherein the change in pixel value is above a contrast threshold. The change in pixel value between the pixel values of the plurality of defect pixels and the pixels of the plurality of pixels is similar to a contrast measure between the pixel values pf the plurality of defect pixels and the plurality of pixels that are in vicinity to the plurality of defect pixels. The plurality of pixels that are in vicinity to the plurality of defect pixels may be neighbouring pixels to the defect pixels.

The one or more pixel value criteria includes a pixel value threshold that the pixel values of the plurality of defect pixels are above.

The pixel value threshold may be between 150 and 400. So, for example, the pixel value threshold may be set to 200, then a pixel value of above 200 would be considered to potentially include a defect region.

The glare detection algorithm may be based on a contrast image processing that is configured to detect small local contrast elements, such as glare defects, in the processed image scan data. The contrast image processing may be based on a top-hat transformation. The top-hat transformation includes one or more of following transformations, a white top-hat transformation (WTH) which includes an opening operation, and a black top-hat transformation (BTH) which includes a closing operation. The white top-hat transformation returns the plurality of defect pixels, containing those glares of the processed image scan data that are "smaller" than the internal elements (i.e., caries, dentine, enamel etc.), and are brighter than their surroundings. The black top-hat transformation is used to do the opposite, enhance dark objects of interest in a bright background.

The white top-hat transformation may include following equation:

$$WTH(f) = f - f \circ b$$

, where f is the processed image scan data, b is a structuring glare defect element which includes a size or width of glare defects to be detected by the white top-hat transformation, and ∘ is an opening operation. The white top-hat transformation is an effective method for removing glare defects, which means that minimal processing resources are used for removing glare defects.

The black top-hat transformation includes following equation:

$$BTH(f) = f \cdot b - f$$

, where *f* is the processed image scan data, *b* is a structuring glare defect element which includes a size or width of glare defects to be detected by the black top-hat transformation, **and •is** a closing operation. The black top-hat transformation comes in hand if the processed image scan data are somehow inverted, such that pixels that appear light become dark, e.g. black pixels, and vice versa, for dark pixels they become light pixels, e.g. white pixels.

The glare detection algorithm may include following steps; processing one or more image scan data of the plurality of image scan data into a second processed image scan data, and then determining, based on a pixel value of the plurality of pixels of the processed image scan data, a first group of defect pixels, and determining, based on a pixel value of a plurality of pixels of the second processed image scan data, a second group of defect pixels. The glare detection algorithm may include determining, by comparing the first and second processed image scan data, a defect pixel of the group of defect pixels of the first processed image scan data when a location of a defect pixel of the first and the second group of defect pixels relative to the dental object matches. The comparing of the first and second processed image scan data provides an improved likelihood that the detected defect pixels do include a glare defect.

The first processed image scan data includes one or more image scan data that is captured after the one or more image scan data of the second processed image scan data. The processed image scan data may correspond to a sub-scan where all pixels of each of the processed image scan data are in focus. The first processed image scan data and the second processed image scan data may include corresponding pixels, i.e. overlapping pixels, which includes the same image scan data of the dental object. In this example, the comparing of the first and second processed image scan data which involved matching defect pixels provides an improved likelihood that the detected defect pixels do include a glare defect. However, in another example, the first and second processed image scan data do include overlapping pixels but the angle between the image sensor of the intraoral scanner and the dental object has changed between the first and second processed image scan data. In this example, the overlapping pixels do include image scan data of a same area of the dental object but with a different angle. If a potential glare defect is identified in the first processed image scan data, and in the corresponding area of the dental object in the second processed image scan data no glare defect is identified, then the identified potential glare defect is ignored and not removed by the glare-removal algorithm.

When a glare defect is identified in the processed image scan data the glare-removal algorithm is configured to remove the glare defect and replace it with new pixel values that have been determined based on surrounding pixels relative to the defect pixels that include the glare defect.

The glare-removal algorithm may be configured to determine a glare region that includes the plurality of defect pixels, determine a non-glare region that at least partially surrounds the glare region, and wherein the non-glare region includes a non-glare group of pixels of the plurality of pixels, determine a new pixel value for each of the plurality of defect pixels by interpolating between pixels of the non-glare group of pixels and one or more of defect pixels of the glare region, and replace a pixel value for each of the plurality of defect pixels with the new pixel value. By replacing the pixel value of each of the plurality of defect pixels with the new pixel value would replace the glare defect with pixel values that provides a smooth and natural transition from the non-glare group of pixels to the pixels with the new pixel values.

The glare-removal algorithm includes determining a new pixel value of a defect pixel of the plurality of defect pixels by determining multiple differences to neighbouring pixels of the defect pixel, and wherein a summation of the multiple differences is zero or about zero. The multiple differences may be between a defect pixel and the neighbouring pixels. For example, the neighbouring pixels relative to the defect pixels ($x1$) may include following parameters (63, $x2$, $x3$, 62), wherein $x2$ and $x3$ are other defect pixels. The summation of the multiple differences may be expressed in following way:

$$(63 - x1) + (x2 - x1) + (x3 - x1) + (62 - x1) = 0$$

, where the summation is zero or about zero.

The plurality of pixels and the plurality of defect pixels may be arranged in a mesh, wherein each vertex of the mesh includes a pixel value for a pixel of the plurality of pixels and for a defect pixel of the plurality of defect pixels. The glare-removal algorithm may include determining a first new pixel value for each of the plurality of defect pixels by interpolating between pixels of the non-glare group of pixels and across one or more of defect pixels of the glare region in a first direction in the mesh, determining a second new pixel value for each of the plurality of defect pixels by interpolating between pixels of the non-glare group of pixels and across one or more of defect pixels of the glare region in a second direction in the mesh, determining a new pixel value for each of the plurality of defect pixels by averaging the first new pixel value and the second new pixel value for each of the plurality of defect pixels, and replacing a pixel value for each of the plurality of defect pixels with the new pixel value of the corresponding defect pixel of the plurality of defect pixels. The interpolation provides a smooth transition from the pixel values of the non-glare group of pixels to the new pixel values of the defect pixels. Furthermore, providing the interpolations in multiple directions in the mesh would provide an even more smooth transition, i.e. a natural transition, between the plurality of pixels with the new pixel values.

According to the aspect, an intraoral scanning system is disclosed. The intraoral scanning system comprises an intraoral scanner configured to produce a plurality of image scan data of a dental object. The intraoral scanner may also be named as an intraoral scanning device or a scanning device. The scanning device may employ a scanning principle such as triangulation-based scanning, confocal scanning, focus scanning, ultrasound scanning, x-ray scanning, stereo vision, structure from motion, optical coherent tomography OCT, or any other scanning principle. The system may include one or more processors, and the one or more processors may be arranged in the intraoral scanner or an external computer, or the one or more processors may be arranged in the intraoral scanner, and/or multiple external computers, such as a laptop, a stationary computer, a server, a cloud server etc. The one or more processors may be configured to process one or more image scan data of the plurality of image scan data into a processed image scan data, wherein the processed image scan data includes a plurality of pixels. The one or more processors may be configured to determine a plurality of defect pixels in the processed image scan data by a glare detection algorithm, wherein the glare detection algorithm is configured to determine the plurality of defect pixels, when a pixel value of each of the plurality of defect pixels fulfils one or more pixel value criteria, and, when a geometry of an arrangement of the plurality of defect pixels fulfils one or more geometry criteria, and to determine, by a glare-removal algorithm, non-glare image scan data by analysing pixels of the plurality of pixels that are in vicinity to the plurality of defect pixels, wherein the processed image scan data in the plurality of defect pixels are replaced by the non-glare image scan data.

The intraoral scanner may include a first light source configured to emit visible wavelengths and a second light source configured to emit a non-visible wavelength, and wherein the plurality of image scan data includes a first image scan data that includes the visible wavelength and at least a second image scan data that includes the non-visible wavelength, and wherein the processed image scan data includes a composition of the first image scan data and the at least second image scan data.

The intraoral scanner may include a third light source configured to emit another non-visible wavelength, and wherein the plurality of image scan data includes a third image scan data that includes another non-visible wavelength. The processed image scan data includes a composition of the first image scan data, the at least second image scan data and the third image scan data.

The intraoral scanner may include a light source polarizer configured to polarize the emitted light from one light source or from three light sources configured to emit UV, VIS and infrared light. The light source polarizer may be optimized for a wavelength range from 350 nm to 1100 nm.

## BRIEF DESCRIPTION OF THE FIGURES

Aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

FIG. 1 illustrates a flow diagram of a computer-implemented method;
FIG. 2 illustrates an intraoral scanning system;
FIG. 3 illustrates an example of a glare defect;
FIGS. 4A and 4B illustrate a workflow of the glare detection algorithm,
FIGS. 5A and 5B illustrate different examples of a processed image scan data,
FIGS. 6A and 6B illustrate an example of a glare detection algorithm,
FIGS. 7A and 7B illustrate an example of a glare detection algorithm,
FIGS. 8A and 8B illustrate an example of removing and replacing a plurality of defect pixels, and
FIGS. 9A and 9B illustrate an example of a glare-removal algorithm.

## DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the devices, systems, mediums, programs and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microprocessors, microcontrollers, digital signal processors (DSPs), field programmable gate arrays (FPGAs), programmable logic devices (PLDs), gated logic, discrete hardware circuits, and other suitable hardware configured to perform the various functionality described throughout this disclosure. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

A scanning for providing intra-oral scan data may be performed by a dental scanning system that may include an intraoral scanning device, such as the TRIOS series scanners from 3Shape A/S. The dental scanning system may include a wireless capability as provided by a wireless network unit. The scanning device may employ a scanning principle such as triangulation-based scanning, confocal scanning, focus scanning, ultrasound scanning, x-ray scanning, stereo vision, structure from motion, optical coherent tomography OCT, or any other scanning principle. In an embodiment, the scanning device is capable of obtaining surface information by operated by projecting a pattern and translating a focus plane along an optical axis of the scanning device and capturing a plurality of 2D images at different focus plane positions such that each series of captured 2D images corresponding to each focus plane forms a stack of 2D images. The acquired 2D images are also referred to herein as raw 2D images, wherein raw in this context means that the images have not been subject to image processing. The focus plane position is preferably shifted along the optical axis of the scanning system, such that 2D images captured at several focus plane positions along the optical axis form said stack of 2D images (also referred to herein as a sub-scan) for a given view of the object, i.e. for a given arrangement of the scanning system relative to the object. After moving the scanning device relative to the object or imaging the object at a different view, a new stack of 2D images for that view may be captured. The focus plane position may be varied by means of at least one focus element, e.g., a moving focus lens. The scanning device is generally moved and angled relative to the dentition during a scanning session, such that at least some sets of sub-scans overlap at least partially, to enable reconstruction of the digital dental 3D model by stitching overlapping 3D subscans together in real-time and display the progress of the virtual 3D model on a display as feedback to the user. The result of stitching is the digital 3D representation of a surface larger than that which can be captured by a single sub-scan, i.e. which is larger than the field of view of the 3D scanning device. Stitching, also known as registration and fusion, works by identifying overlapping regions of 3D surface in various sub-scans and transforming sub-scans to a common coordinate system such that the overlapping regions match, finally yielding the digital 3D model. An Iterative Closest Point (ICP) algorithm may be used for this purpose. Another example of a scanning device is a triangulation scanner, where a time varying pattern is projected onto the dental object and a sequence of images of the different pattern configurations are acquired by one or more cameras located at an angle relative to the projector unit.

The dental scanning system may be an intraoral scanning system. The scanning device may be an intraoral scanning device.

Color texture of the dental object may be acquired by illuminating the object using different monochromatic colors such as individual red, green and blue colors or my illuminating the object using multichromatic light such as white light. A 2D image may be acquired during a flash of white light.

Generally, the process of obtaining surface information in real time of a dental object to be scanned requires the scanning device to illuminate the surface and acquire high number of 2D images. Typically, a high-speed camera is used with a framerate of 300-2000 2D frames pr second dependent on the technology and 2D image resolution. The high amount of image data needed to be handled by the scanning device to eighter directly forward the raw image data stream to an external processing device or performing some image processing before transmitting the data to an external device or display. This process requires that multiple electronic components inside the scanner is operating with a high workload thus requiring a high demand of current.

The scanning device comprises one or more light projectors configured to generate an illumination pattern to be projected on a three-dimensional dental object during a scanning session. The light projector(s) preferably comprises a light source, a mask signal having a spatial pattern, and one or more lenses such as collimation lenses or projection lenses. The light source may be configured to generate light of a single wavelength or a combination of wavelengths (mono- or polychromatic). The combination of wavelengths may be produced by using a light source configured to produce light (such as white light) comprising different wavelengths. Alternatively, the light projector(s) may comprise multiple light sources such as LEDs individually producing light of different wavelengths (such as red, green, and blue) that may be combined to form light comprising the different wavelengths. Thus, the light produced by the light source may be defined by a wavelength defining a specific color, or a range of different wavelengths defining a combination of colors such as white light. In an embodiment, the scanning device comprises a light source configured for exciting fluorescent material of the teeth to obtain fluorescence data from the dental object. Such a light source may be configured to produce a narrow range of wavelengths. In another embodiment, the light from the light source is infrared (IR) light, which is capable of penetrating dental tissue. The light projector(s) may be DLP projectors using a micro mirror array for generating a time varying pattern, or a diffractive optical element (DOF), or back-lit mask signal projectors, wherein the light source is placed behind a mask signal having a spatial pattern, whereby the light projected on the surface of the dental object is patterned. The back-lit mask signal projector may comprise a collimation lens for collimating the light from the light source, said collimation lens being placed between the light source and the mask signal. The mask signal may have a checkerboard pattern, such that the generated illumination pattern is a checkerboard pattern. Alternatively, the mask signal may feature other patterns such as lines or dots, etc.

The scanning device preferably further comprises optical components for directing the light from the light source to the surface of the dental object. The specific arrangement of the optical components depends on whether the scanning device is a focus scanning apparatus, a scanning device using triangulation, or any other type of scanning device. A focus scanning apparatus is further described in EP 2 442 720 B1 by the same applicant, which is incorporated herein in its entirety.

The light reflected from the dental object in response to the illumination of the dental object is directed, using optical components of the scanning device, towards the image sensor(s). The image sensor(s) are configured to generate a plurality of images based on the incoming light received from the illuminated dental object. The image sensor unit may be a high-speed image sensor such as an image sensor configured for acquiring images with exposures of less than 1/1000 second or frame rates in excess of 250 frames pr. second (fps). As an example, the image sensor may be a rolling shutter (CCD) or global shutter sensor (CMOS). The image sensor(s) may be a monochrome sensor including a color filter array such as a Bayer filter and/or additional filters that may be configured to substantially remove one or more color components from the reflected light and retain only the other non-removed components prior to conversion of the reflected light into an electrical signal. For example, such additional filters may be used to remove a certain part of a white light spectrum, such as a blue component, and retain only red and green components from a signal generated in response to exciting fluorescent material of the teeth.

The network unit may be configured to connect the dental scanning system to a network comprising a plurality of network elements including at least one network element configured to receive the processed data. The network unit may include a wireless network unit or a wired network unit. The wireless network unit is configured to wirelessly connect the dental scanning system to the network comprising the plurality of network elements including the at least one network element configured to receive the processed data. The wired network unit is configured to establish a wired connection between the dental scanning system and the network comprising the plurality of network elements including the at least one network element configured to receive the processed data.

The dental scanning system preferably further comprises a processor configured to generate scan data (such as extra-oral scan data and/or intra-oral scan data) by processing the two-dimensional (2D) images acquired by the scanning device. The processor may be part of the scanning device. As an example, the processor may comprise a Field-programmable gate array (FPGA) and/or an Advanced RISC Machines (ARM) processor located on the scanning device. The scan data comprises information relating to the three-dimensional dental object. The scan data may comprise any of: 2D images, 3D point clouds, depth data, texture data, intensity data, color data, and/or combinations thereof. As an example, the scan data may comprise one or more point clouds, wherein each point cloud comprises a set of 3D points describing the three-dimensional dental object. As another example, the scan data may comprise images, each image comprising image data e.g. described by image coordinates and a timestamp (x, y, t), wherein depth information can be inferred from the timestamp. The image sensor(s) of the scanning device may acquire a plurality of raw 2D images of the dental object in response to illuminating said object using the one or more light projectors. The plurality of raw 2D images may also be referred to herein as a stack of 2D images. The 2D images may subsequently be provided as input to the processor, which processes the 2D images to generate scan data. The processing of the 2D images may comprise the step of determining which part of each of the 2D images are in focus in order to deduce/generate depth information from the images. The internal depth information may be used to generate 3D point clouds comprising a set of 3D points in space, e.g., described by cartesian coordinates (x, y, z). The 3D point clouds may be generated by the processor or by another processing unit. Each 2D/3D point may furthermore comprise a timestamp that indicates when the 2D/3D point was recorded, i.e., from which image in the stack of 2D images the point originates. The timestamp is correlated with the z-coordinate of the 3D points, i.e., the z-coordinate may be inferred from the timestamp. Accordingly, the output of the processor is the scan data, and the scan data may comprise image data and/or depth data, e.g. described by image coordinates and a timestamp (x, y, t) or alternatively described as (x, y, z). The scanning device may be configured to transmit other types of data in addition to the scan data. Examples of data include 3D information, texture information such as infra-red (IR) images, fluorescence images, reflectance color images, x-ray images, and/or combinations thereof.

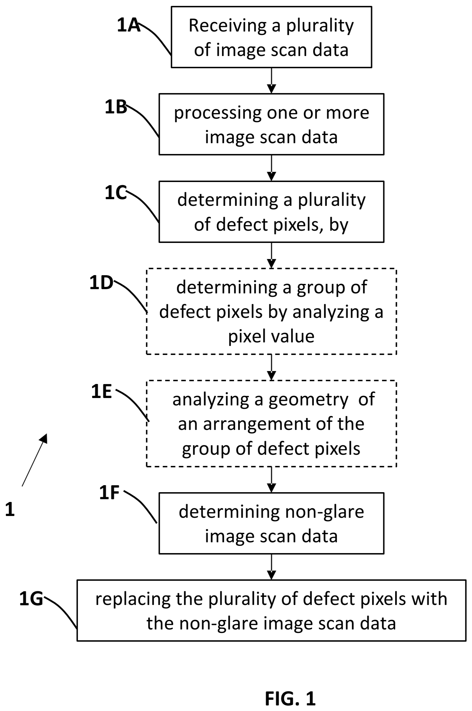

FIG. 1 illustrates a flow diagram of a computer-implemented method 1 for removing a glare defect in a processed image scan data. The method 1 comprising receiving 1A a plurality of image scan data of a dental object produced by an intraoral scanner, processing 1B one or more image scan data of the plurality of image scan data into a processed image scan data, wherein the processed image scan data includes a plurality of pixels, and determining 1C a plurality of defect pixels in the processed image scan data by a glare detection algorithm, wherein the glare detection algorithm is configured to determine the plurality of defect pixels when a pixel value of each of the plurality of defected pixels fulfils one or more pixel value criteria 1D, and, when a geometry 1E of an arrangement of the plurality of pixels fulfils one or more geometry criteria. The method 1 further comprises determining 1F, by a glare-removal algorithm, non-glare image scan data by analysing pixels that are in vicinity to the plurality of defect pixels, and replacing 1G the plurality of defect pixels in the processed image scan data with the non-glare image scan data.

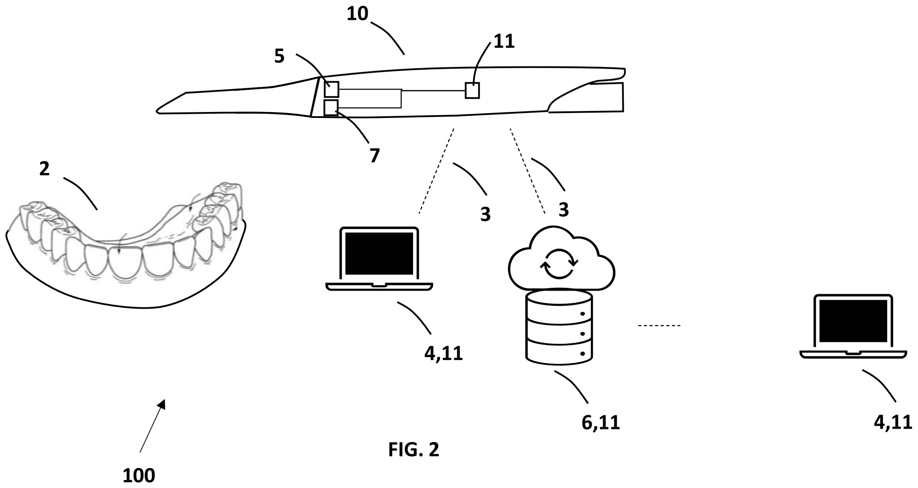

FIG. 2 illustrates an intraoral scanning system 100 that is configured to remove a glare defect in a processed image scan data. The system 100 comprises an intraoral scanner 10 configured to produce a plurality of image scan data of a dental object 2, and one or more processors 11 configured to process one or more image scan data of the plurality of image scan data into a processed image scan data, wherein the processed image scan data includes a plurality of pixels, determine, by a glare detection algorithm, a plurality of defect pixels in the processed image scan data by analysing a pixel value of each of the plurality of pixels, determine, by a glare-removal algorithm, non-glare image scan data by analysing pixels that are in vicinity to the plurality of defect pixels, and replace the plurality of defect pixels in the processed image scan data with the non-glare image scan data. In this example the intraoral scanner 10 includes a light source 5 and an image sensor 7 operationally connected to the one or more processor units 11. In this specific example, the system 100 includes multiple processors 11 arranged in the intraoral scanner 10 and multiple external devices (4, 6), such as an external computer 4 and a cloud server 6.

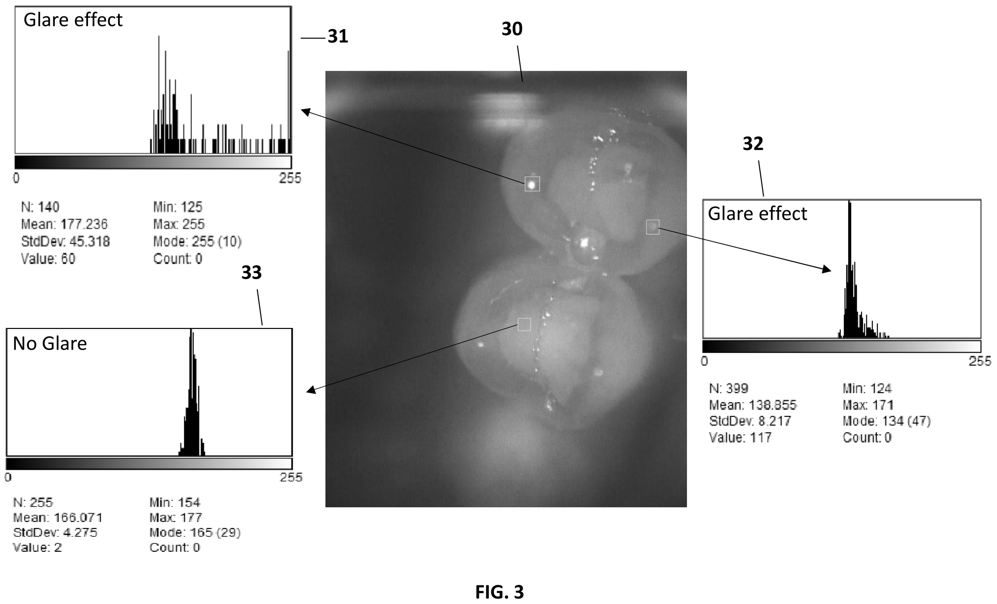

FIG. 3 illustrates an example on why it wouldn't be feasible to detect possible glare defects based solely on pixel values. The image 30 includes processed image scan data that includes multiple glare defects (31, 32) and other elements 33 that are either part of the anatomy of the teeth in the image 30 or image artifacts. Furthermore, a histogram analysis (31, 32, 33) of the pixel values in three different areas on the raw infrared image 30 is also seen. For example, an obvious example on a glare defect is the histogram 31 which has a pixel value of above 200, however, in the examples seen in histogram 32 and 33, the highest pixel value in 33 is higher than in 32 even though the area of the tooth that is covered by the histogram analysis 33 does not include a glare defect but does in histogram 32. That's why the geometry of the arrangement of the group of defect pixels in the image shall be considered together with the pixel values.

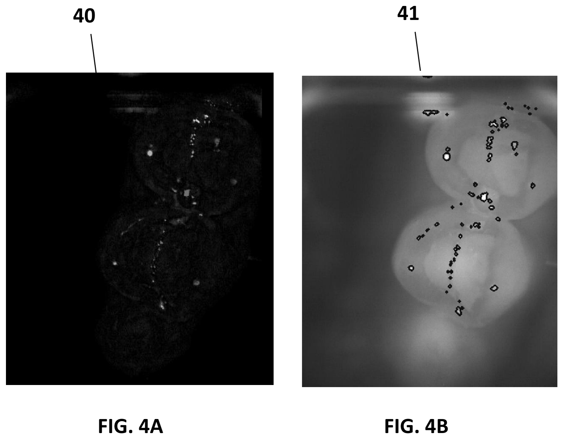

FIGs. 4A and 4B illustrate a workflow of the glare detection algorithm. FIG. 4A illustrates a top-hat transformation of a processed image that includes processed image scan data. The top-hat transformation is configured to determine the plurality of defect pixels that fulfils the one or more pixel value criteria and the one or more geometry criteria.

The one or more pixel value criteria may include a change in pixel value between the pixel values of the plurality of defect pixels and the pixels of the plurality of pixels that are in vicinity to the plurality of defect pixels, wherein the change in pixel value is above a contrast threshold. The one or more pixel value criteria may include a pixel value threshold that the pixel values of the plurality of defect pixels are above.

The one or more geometry criteria includes: a size criterion assessing whether the geometry has an area that is within an area range, a width criterion assessing whether the geometry has a width along a dimension of the plurality of defect pixels that is within a width range, and a shape criterion assessing whether the geometry has a shape that matches a plurality of glare shape templates. The top-hat transformation increases the contrasts of the plurality of defect pixels by lowering significantly the pixel value of the remaining pixels of the processed image 40. The result of the enhanced contrasts of the plurality of defect pixels is seen in FIG. 4A. In FIG. 4B, the plurality of defect pixels is applied onto the processed image 41 so that the glare-removal algorithm can replace the plurality of defect pixels in the processed image scan data with non-glare image scan data.

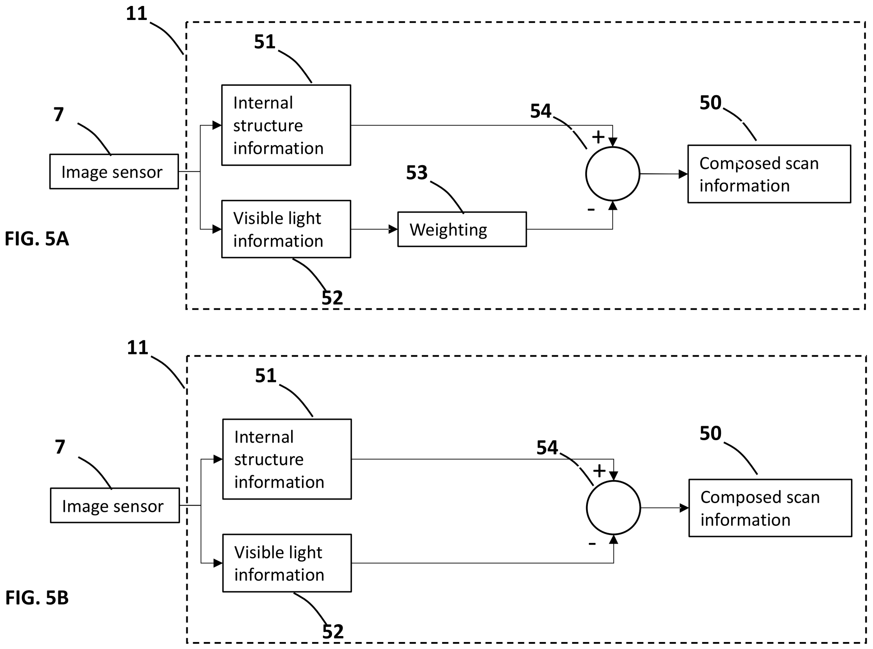

The processed image scan data may include solely infrared image scan data or fluorescent image scan data. FIGs. 5A and 5B illustrate examples on processed image scan data 50 which includes a composition of image scan data with different wavelengths. In both examples, the image sensor 7, which may be one or more image sensor units, provides captured internal structure information, i.e. infrared image scan data, and visible light information, i.e. colored light information, which are then combined 54 to produce composed scan information 50. For example, the visible light information 52 is being subtracted from the internal structure information 51 which means that any surface reflections from the dental object that may occur in the internal structure information would be removed in the composed scan information 50, and thereby, the contrast of, for example, dental feature defects, such as proximal caries, would be significantly enhanced when comparing to known contrast enhancement methods applied to internal structure information. In the specific example illustrated in FIG. 5A, different color channels of the visible light information, for example, red channel, green channel and blue channel, would be weighted 53 differently for the purpose of improving even more the contrast enhancement of the internal structure information. In FIG. 5B, the color channels would not have any weightings.

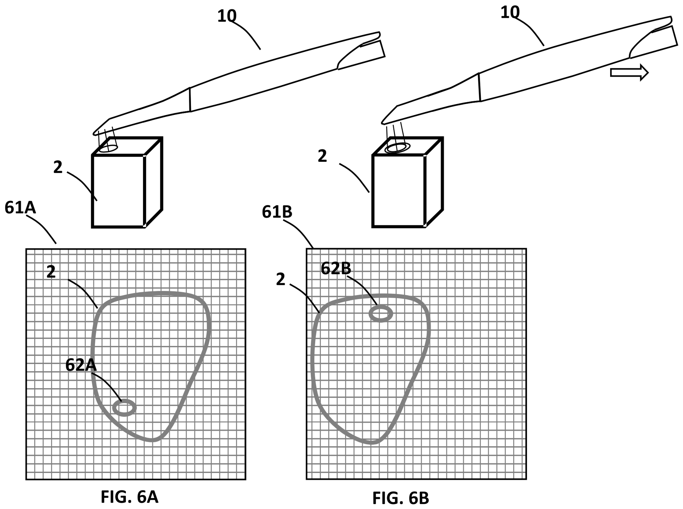

FIGs. 6A and 6B illustrate an example of the glare detection algorithm which is configured to determine whether a pixel includes a glare defect by comparing two processed image scan data which includes overlapping pixels that cover the same area of the dental object. In FIG. 6A, the intraoral scanner 10 acquires an image scan data 61A which includes a first potential glare defect 62A located at a first position on the dental object 2. In FIG. 6B, the intraoral scanner 10 has moved slightly still covering the same dental object 2 and a second image scan data 61B is acquired. The second image scan data 61B includes a second glare defect 62B which is located differently than the first potential glare defect 62A relative to the dental object 2. Furthermore, none of the potential glare defects (62A, 62B) appear in both image scan data (61A, 61B). Since the two potential glare defects (62A, 62B) are not appearing in the two image scan data acquired (61A, 61B) at different time, then the glare detection algorithm would consider the two potential glare defects (62A, 62B) as actual glare defects that should be removed by the glare-removal algorithm.

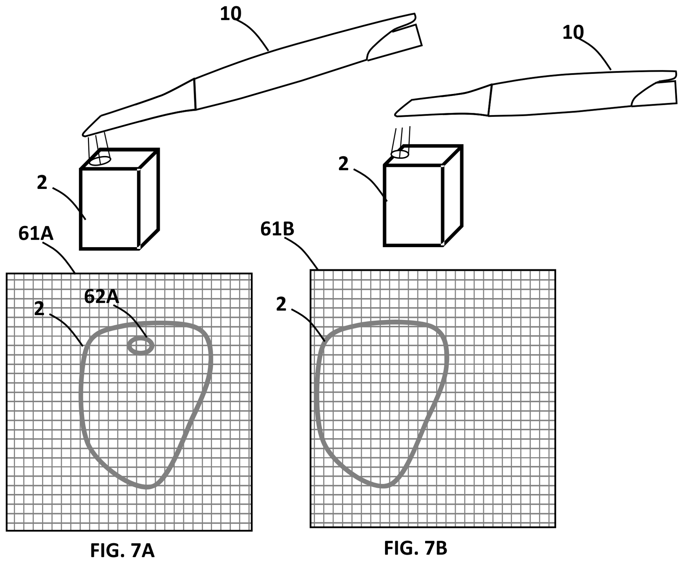

FIGs. 7A and 7B illustrate an example of the glare detection algorithm which is configured to determine whether a pixel includes a glare defect by comparing two processed image scan data which includes overlapping pixels that cover the same area of the dental object. In FIG. 7A, the intraoral scanner 10 acquires an image scan data 61A which includes a first potential glare defect 62A located at a first position on the dental object 2. In FIG. 7B, the orientation of the intraoral scanner 10 has changed slightly still covering the same area of the dental object 2 but with a different angle between the surface of the dental object 2 and the image sensor 7 of the intraoral scanner 10. In. FIG. 7B a second image scan data 61B is acquired, and the previously detected glare defect in the first image scan data 61A is no more appearing on the dental object 2 in the second image scan data 61B. In this example, the glare detection algorithm would consider the potential glare defect 62A as an actual glare defect that should be removed by the glare-removal algorithm.

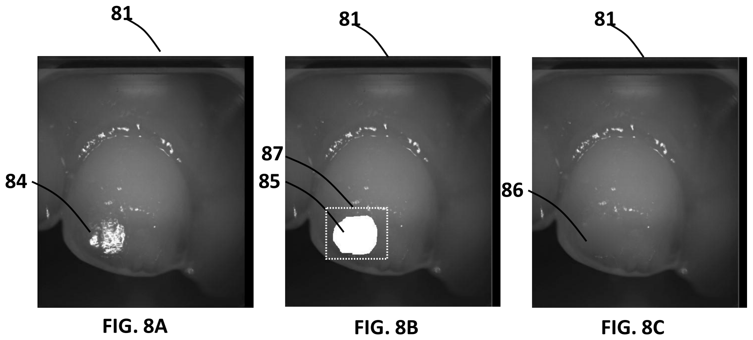

FIGs. 8A to 8C illustrates an example of removing and replacing the plurality of defect pixels with non-glare image scan data. In FIG. 8A, the processed image scan data 81 is seen with a glare defect 84, and in FIG. 8B, the glare detection algorithm detects the plurality of defect pixels 85, and in FIG. 8C, the glare detection algorithm replaces the processed image scan data in the plurality of defect pixels with non-glare image scan data 86. In this example, the glare-removal algorithm may be configured to determine a glare region 84 that includes the plurality of defect pixels 85, determine a non-glare region 87 that at least partially surrounds the glare region 85 and wherein the non-glare region 87 includes a non-glare group of pixels of the plurality of pixels, determine a new pixel value for each of the plurality of defect pixels by interpolating between pixels of the non-glare group of pixels and one or more of defect pixels of the glare region, and replace a pixel value for each of the plurality of defect pixels with the new pixel value.

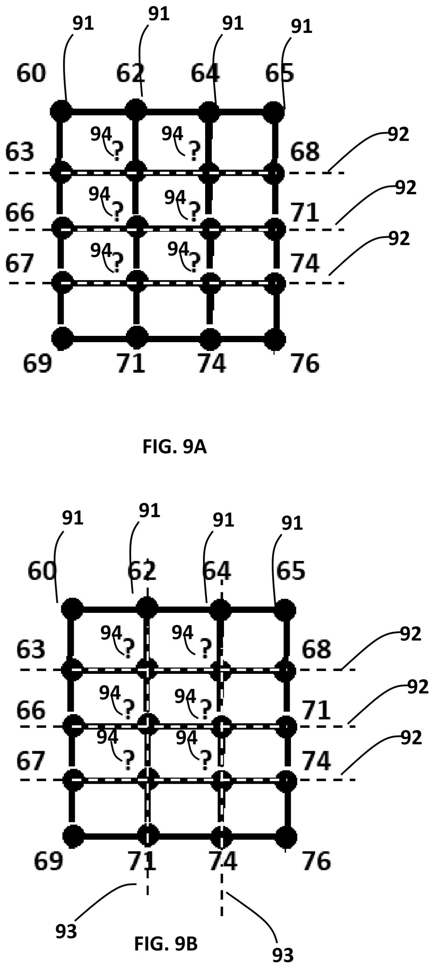

FIGS. 9A and 9B illustrate a mesh with different vertex for each pixel of the plurality of pixels in the mesh. Two vertices are connected by an edge in the graph, if the corresponding pixels are neighbouring in the processed image scan data. In both FIGS. 9A and 9B, vertices 91 that have been assigned with a value represents pixels without any glare defect, and the vertices with a question mark represents pixels with a glare defect 94. In FIG. 9A, the glare-removal algorithm includes determining a first new pixel value for each of the plurality of defect pixels 94 by interpolating between pixels of the non-glare group of pixels 91 and across one or more of defect pixels 94 of the glare region in a first direction 92 in the mesh, replacing a pixel value for each of the plurality of defect pixels 94 with the first new pixel value of the corresponding defect pixel of the plurality of defect pixels 94. In FIG. 9A the glare-removal algorithm includes determining a first new pixel value for each of the plurality of defect pixels 94 by interpolating between pixels of the non-glare group of pixels 91 and across one or more of defect pixels 94 of the glare region in a first direction 92 in the mesh, determining a second new pixel value for each of the plurality of defect pixels 94 by interpolating between pixels of the non-glare group of pixels 91 and across one or more of defect pixels 94 of the glare region in a second direction 93 in the mesh, determining a new pixel value for each of the plurality of defect pixels 94 by averaging the first new pixel value and the second new pixel value for each of the plurality of defect pixels 94, and replacing a pixel value for each of the plurality of defect pixels 94 with the new pixel value of the corresponding defect pixel of the plurality of defect pixels 94.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

ITEM

1. A computer-implemented method for removing a glare defect in a processed image scan data, comprising:

- receiving a plurality of image scan data of a dental object produced by an intraoral scanner,
- processing one or more image scan data of the plurality of image scan data into a processed image scan data, wherein the processed image scan data includes a plurality of pixels,
- determining a plurality of defect pixels in the processed image scan data by a glare detection algorithm, wherein the glare detection algorithm is configured to determine the plurality of defect pixels, when a pixel value of each of the plurality of defect pixels fulfils one or more pixel value criteria, and, when a geometry of an arrangement of the plurality of defect pixels fulfils one or more geometry criteria,
- determining, by a glare-removal algorithm, non-glare image scan data by analysing pixels of the plurality of pixels that are in vicinity to the plurality of defect pixels, and
- replacing the processed image scan data in the plurality of defect pixels with the non-glare image scan data.

2. The computer-implemented method according to item 1, wherein the one or more pixel value criteria includes a change in pixel value between the pixel values of the plurality of defect pixels and the pixels of the plurality of pixels that are in vicinity to the plurality of defect pixels, wherein the change in pixel value is above a contrast threshold.

3. The computer-implemented method according to any of the previous items, wherein the one or more pixel value criteria includes a pixel value threshold that the pixel values of the plurality of defect pixels are above.

4. The computer-implemented method according to any of the previous items, wherein the plurality of image scan data includes a first image scan data that includes a visible wavelength and at least a second image scan data that includes a non-visible wavelength, wherein the processed image scan data includes a composition of the first image scan data and the at least second image scan data.

5. The computer-implemented method according to item 4, comprising determining a composition of the first image scan data and the processed image scan data, wherein the processed image scan data includes the at least second image scan data, and the processed image scan data in the plurality of defect pixels are replaced by the non-glare image scan data.

6. The computer-implemented method according to any of the previous items, wherein the arrangement of the plurality of defect pixels includes contiguous pixels.

7. The computer-implemented method according to any previous items, wherein the one or more geometry criteria includes:

- a size criterion assessing whether the geometry has an area that is within an area range,
- a width criterion assessing whether the geometry has a width along a dimension of the plurality of defect pixels that is within a width range, and
- a shape criterion assessing whether the geometry has a shape that matches a plurality of glare shape templates.

8. The computer-implemented method according to any of the previous items, wherein the glare detection algorithm includes a top-hat transformation, wherein the top-hat transformation includes one or more of following transformations:

- white top-hat transformation (WTH) which includes an opening operation; and
- black top-hat transformation (BTH) which includes a closing operation.

9. The computer-implemented method according to item 8, wherein the white top-hat transformation includes following equation:

$$WTH(f) = f - f \circ b$$

, where $f$ is the processed image scan data, $b$ is a structuring glare defect element which includes a size or width of glare defects to be detected by the white top-hat transformation, and $\circ$ is an opening operation.

10. The computer-implemented method according to item 8, wherein the black top-hat transformation includes following equation:

$$BTH(f) = f \bullet b - f$$

, where $f$ is the processed image scan data, $b$ is a structuring glare defect element which includes a size or width of glare defects to be detected by the black top-hat transformation, and • is a closing operation.

11. The computer-implemented method according to any of the previous items, wherein the glare detection algorithm includes following steps:

- processing one or more image scan data of the plurality of image scan data into a second processed image scan data,
- determining, based on a pixel value of the plurality of pixels of the processed image scan data, a first group of defect pixels,
- determining, based on a pixel value of a plurality of pixels of the second processed image scan data, a second group of defect pixels,
- determining, by comparing the first and second processed image scan data, a defect pixel of the plurality of defect pixels of the first processed image scan data when a location of a defect pixel of the first and the second group of defect pixels relative to the dental object matches.

12. The computer-implemented method according to item 11, wherein the first processed image scan data includes one or more image scan data that is captured after the one or more image scan data of the second processed image scan data.

13. The computer-implemented method according to any of the previous items, wherein the glare-removal algorithm is configured to:

- determine a glare region that includes the plurality of defect pixels,
- determine a non-glare region that at least partially surrounds the glare region, and wherein the non-glare region includes a non-glare group of pixels of the plurality of pixels,
- determine a new pixel value for each of the plurality of defect pixels by interpolating between pixels of the non-glare group of pixels and one or more of defect pixels of the glare region, and
- replace a pixel value for each of the plurality of defect pixels with the new pixel value.

14. The computer-implemented method according to item 13, wherein the glare-removal algorithm includes determining for a defect pixel of the plurality of defect pixels multiple differences to neighbouring pixels of the plurality of pixels, and wherein a summation of the multiple differences is zero or about zero.

15. The computer-implement method according to item 13, wherein the plurality of pixels and the plurality of defect pixels are arranged in a mesh, wherein each vertex of the mesh includes a pixel value for a pixel of the plurality of pixels and for a defect pixel of the plurality of defect pixels, and wherein the glare-removal algorithm includes:

- determining a first new pixel value for each of the plurality of defect pixels by interpolating between pixels of the non-glare group of pixels and across one or more of defect pixels of the glare region in a first direction in the mesh,
- determining a second new pixel value for each of the plurality of defect pixels by interpolating between pixels of the non-glare group of pixels and across one or more of defect pixels of the glare region in a second direction in the mesh,
- determining a new pixel value for each of the plurality of defect pixels by averaging the first new pixel value and the second new pixel value for each of the plurality of defect pixels, and
- replacing a pixel value for each of the plurality of defect pixels with the new pixel value of the corresponding defect pixel of the plurality of defect pixels.

16. An intraoral scanning system that is configured to remove a glare defect in a processed image scan data, wherein the system comprises:

- an intraoral scanner configured to produce a plurality of image scan data of a dental object;
- one or more processors configured to:

  ○ process one or more image scan data of the plurality of image scan data into a processed image scan data, wherein the processed image scan data includes a plurality of pixels,
  ○ determine a plurality of defect pixels in the processed image scan data by a glare detection algorithm, wherein the glare detection algorithm is configured to determine the plurality of defect pixels when a geometry of an arrangement of the plurality of pixels which has a pixel value that is above a pixel value threshold fulfils one or more geometry criteria,
  ○ determine, by a glare-removal algorithm, non-glare image scan data by analysing pixels that are in vicinity to the plurality of defect pixels, and
  ○ replace the plurality of defect pixels in the processed image scan data with the non-glare image scan data.

17. The intraoral scanning system according to item 16, wherein the intraoral scanner includes a first light source configured to emit visible wavelengths and a second light source configured to emit a non-visible wavelength, and wherein the plurality of image scan data includes a first image scan data that includes the visible wavelength and at least a second image scan data that includes the non-visible wavelength, and wherein the processed image scan data includes a composition of the first image scan data and the at least second image scan data.

18. The intraoral scanning system according to item 17, wherein the intraoral scanner includes a third light source configured to emit another non-visible wavelength, and wherein the plurality of image scan data includes a third image scan data that includes the another non-visible wavelength, and wherein the processed image scan data includes a composition of the first image scan data, the at least second image scan data and the third image scan data.

**Claims**

1. A computer-implemented method for removing a glare defect from diagnostic image scan data of a dental object obtained by an intraoral scanner, the method comprising:

• receiving a plurality of image scan data of a dental object produced by an intraoral scanner, wherein the plurality of image scan data includes image scan data with three-dimensional image scan data and diagnostic image scan data,

• processing the diagnostic image scan data into a processed image scan data, wherein the processed image scan data includes a plurality of pixels,

• determining a plurality of defect pixels in the processed image scan data by a glare detection algorithm, wherein the glare detection algorithm is configured to determine the plurality of defect pixels, when a pixel value of each of the plurality of defect pixels fulfils one or more pixel value criteria, and, when a geometry of an arrangement of the plurality of defect pixels fulfils one or more geometry criteria,

• determining, by a glare-removal algorithm, non-glare image scan data by analysing pixels of the plurality of pixels that are in vicinity to the plurality of defect pixels,

• replacing the processed image scan data in the plurality of defect pixels with the non-glare image scan data,

• reconstructing and displaying a three-dimensional model of the dental object based on the image scan data with three-dimensional image scan data, and

• displaying the diagnostic image scan data with the non-glare image scan data.

2. The computer-implemented method according to claim 1, wherein the one or more pixel value criteria includes a change in pixel value between the pixel values of the plurality of defect pixels and the pixels of the plurality of pixels that are in vicinity to the plurality of defect pixels, wherein the change in pixel value is above a contrast threshold.

3. The computer-implemented method according to any of the previous claims, wherein the one or more pixel value criteria includes a pixel value threshold that the pixel values of the plurality of defect pixels are above.

4. The computer-implemented method according to any of the previous claims, wherein the plurality of image scan data includes a first image scan data that includes a visible wavelength and at least a second image scan data that includes a non-visible wavelength, wherein the processed image scan data includes a composition of the first image scan data and the at least second image scan data.

5. The computer-implemented method according to claim 4, comprising determining a composition of the first image scan data and the processed image scan data, wherein the processed image scan data includes the at least second image scan data, and the processed image scan data in the plurality of defect pixels are replaced by the non-glare image scan data.

6. The computer-implemented method according to any of the previous claims, wherein the arrangement of the plurality of defect pixels includes contiguous pixels.

7. The computer-implemented method according to any previous claims, wherein the one or more geometry criteria includes:

• a size criterion assessing whether the geometry has an area that is within an area range,

• a width criterion assessing whether the geometry has a width along a dimension of the plurality of defect pixels that is within a width range, and

• a shape criterion assessing whether the geometry has a shape that matches a plurality of glare shape templates.

8. The computer-implemented method according to any of the previous claims, wherein the glare detection algorithm includes a top-hat transformation, wherein the top-hat transformation includes one or more of following transformations:

- white top-hat transformation (WTH) which includes an opening operation; and
- black top-hat transformation (BTH) which includes a closing operation.

9. The computer-implemented method according to claim 8, wherein the white top-hat transformation includes following equation:

$$WTH(f) = f - f \circ b$$

, where $f$ is the processed image scan data, $b$ is a structuring glare defect element which includes a size or width of glare defects to be detected by the white top-hat transformation, and ∘ is an opening operation.

10. The computer-implemented method according to claim 8, wherein the black top-hat transformation includes following equation:

$$BTH(f) = f \bullet b - f$$

, where *f* is the processed image scan data, *b* is a structuring glare defect element which includes a size or width of glare defects to be detected by the black top-hat transformation, and • is a closing operation.

11. The computer-implemented method according to any of the previous claims, wherein the glare detection algorithm includes following steps:

   • processing the diagnostic image scan data into a second processed image scan data,
   • determining, based on a pixel value of the plurality of pixels of the processed image scan data, a first group of defect pixels,
   • determining, based on a pixel value of a plurality of pixels of the second processed image scan data, a second group of defect pixels,
   • determining, by comparing the first and second processed image scan data, a defect pixel of the plurality of defect pixels of the first processed image scan data when a location of a defect pixel of the first and the second group of defect pixels relative to the dental object matches.

12. The computer-implemented method according to claim 11, wherein the first processed image scan data includes diagnostic image scan data that is captured after the diagnostic image scan data of the second processed image scan data.

13. An intraoral scanning system that is configured to remove a glare defect from diagnostic image scan data of a dental object obtained by an intraoral scanner, wherein the system comprises:

   • an intraoral scanner configured to produce a plurality of image scan data of a dental object, wherein the plurality of image scan data includes image scan data with three-dimensional image scan data and diagnostic image scan data;
   • one or more processors configured to:

      ∘ process the diagnostic image scan data into a processed image scan data, wherein the processed image scan data includes a plurality of pixels,
      ∘ determine a plurality of defect pixels in the processed image scan data by a glare detection algorithm, wherein the glare detection algorithm is configured to determine the plurality of defect pixels when a geometry of an arrangement of the plurality of pixels which has a pixel value that is above a pixel value threshold fulfils one or more geometry criteria,
      ∘ determine, by a glare-removal algorithm, non-glare image scan data by analysing pixels that are in vicinity to the plurality of defect pixels, and
      ∘ replace the plurality of defect pixels in the processed image scan data with the non-glare image scan data,
      ∘ reconstruct and display a three-dimensional model of the dental object based on the image scan data with three-dimensional image scan data, and
      ∘ display the diagnostic image scan data with the non-glare image scan data.

14. The intraoral scanning system according to claim 13, wherein the intraoral scanner includes a first light source configured to emit visible wavelengths and a second light source configured to emit a non-visible wavelength, and wherein the plurality of image scan data includes a first image scan data that includes the visible wavelength and at least a second image scan data that includes the non-visible wavelength, and wherein the processed image scan data includes a composition of the first image scan data and the at least second image scan data.

15. The intraoral scanning system according to claim 14, wherein the intraoral scanner includes a third light source configured to emit another non-visible wavelength, and wherein the plurality of image scan data includes a third image scan data that includes the another non-visible wavelength, and wherein the processed image scan data includes a composition of the first image scan data, the at least second image scan data and the third image scan data.

**1A** Receiving a plurality of image scan data

**1B** processing one or more image scan data

**1C** determining a plurality of defect pixels, by

**1D** determining a group of defect pixels by analyzing a pixel value

**1E** analyzing a geometry of an arrangement of the group of defect pixels

**1F** determining non-glare image scan data

**1G** replacing the plurality of defect pixels with the non-glare image scan data

**1**

**FIG. 1**

EP 4 742 149 A1

**FIG. 2**

EP 4 742 149 A1

**FIG. 3**

**40**

**41**

**FIG. 4A**

**FIG. 4B**

FIG. 5A

FIG. 5B

**FIG. 6A**

**FIG. 6B**

**FIG. 7A**

**FIG. 7B**

FIG. 8A

FIG. 8B

FIG. 8C

**FIG. 9A**

**FIG. 9B**

Europäisches
Patentamt
European
Patent Office
Office européen
des brevets

# EUROPEAN SEARCH REPORT

**Application Number**

EP 25 21 3753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/174477 A1 (SHI CHAO [US] ET AL) 10 June 2021 (2021-06-10) | 1-3,6,13 | INV. G06T5/77 |
| Y | * paragraph [0039] - paragraph [0149] * | 1,4,5,7,14 | G06T5/20 |
| A |  | 8-12,15 |  |
|  | ----- |  |  |
| Y | US 8 224 045 B2 (BURNS PETER D [US]; WONG VICTOR C [US] ET AL.) 17 July 2012 (2012-07-17) | 1,7 |  |
| A | * column 5 - column 6 * | 2-6,8-15 |  |
|  | ----- |  |  |
| Y | METZGER ZVI ET AL: "Reflected near-infrared light versus bite-wing radiography for the detection of proximal caries: A multicenter prospective clinical study conducted in private practices", JOURNAL OF DENTISTRY, vol. 116, 1 January 2022 (2022-01-01), page 103861, XP093359757, AMSTERDAM, NL ISSN: 0300-5712, DOI: 10.1016/j.jdent.2021.103861 Retrieved from the Internet: URL:https://pdf.sciencedirectassets.com/271140/1-s2.0-S0300571221X00140/1-s2.0-S0300571221002840/main.pdf?hash=396ae4a974248abda90fc3a9ecb9e90b42323c8d8dd7de5acb2c27d30ca3d986&host=68042c943591013ac2b2430a89b270f6af2c76d8dfd086a07176afe7c76c2c61&pii=S0300571221002840&tid=spdf-cb90b56a-8c05-4558-bfe0-2a4> | 4,5,14 |  |
| A | * page 2 - page 3 * | 1-3,6-13,15 |  |
|  | ----- |  |  |

**TECHNICAL FIELDS SEARCHED (IPC)**

G06T

The present search report has been drawn up for all claims

| Place of search | Date of completion of the search | Examiner |
|---|---|---|
| Munich | 3 February 2026 | Üreyen, Soner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 3753

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| US 2021174477 | A1 | 10-06-2021 | US 2021174477 A1 | | 10-06-2021 |
| | | | US 2024087097 A1 | | 14-03-2024 |
| | | | US 2025037247 A1 | | 30-01-2025 |
| US 8224045 | B2 | 17-07-2012 | CN 101588750 A | | 25-11-2009 |
| | | | EP 2101637 A1 | | 23-09-2009 |
| | | | JP 2010516332 A | | 20-05-2010 |
| | | | US 2008170764 A1 | | 17-07-2008 |
| | | | WO 2008088672 A1 | | 24-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2442720 B1